# EUROPÄISCHE PATENTSCHRIFT

(11) **EP 3 656 611 B1**
(45) Veröffentlichungstag und Bekanntmachung des Hinweises auf die Patenterteilung: **09.06.2021**
(21) Anmeldenummer: 18208005.1
(22) Anmeldetag: 23.11.2018
(51) Int. Cl.: B27N 3/00, B27N 5/00, B27N 3/04, B27N 7/00, B29C 51/00

(54) **INNENAUSSTATTUNGSTEIL MIT EINEM FASERFORMTEIL UND VERFAHREN ZU DESSEN HERSTELLUNG**
INTERIOR CLADDING WITH A MOULDED FIBRE PART AND METHOD FOR PREPARATION THEREOF
GARNITURE D'INTÉRIEUR AVEC UNE PIÈCE EN FIBRE MOULÉE ET SON PROCÉDÉ DE FABRICATION

(43) Veröffentlichungstag der Anmeldung: 27.05.2020
(73) Patentinhaber: Lisa Dräxlmaier GmbH, 84137 Vilsbiburg (DE)
(72) Erfinder: Clausner, Ivonne, 84028 Landshut (DE); Scheinflug, Michael, 85435 Erding (DE)

(56) Entgegenhaltungen:
- WO-A1-2011/058068
- DE-A1- 2 144 014
- US-A- 5 658 511

## Beschreibung

### Technisches Gebiet

Die vorliegende Erfindung betrifft ein Innenausstattungsteil mit einem Faserformteil für ein Fahrzeug, insbesondere für ein Kraftfahrzeug sowie ein Verfahren zur Herstellung eines solchen Innenausstattungsteils.

### Stand der Technik

Innenausstattungsteile für Fahrzeuge und insbesondere für Kraftfahrzeuge, wie Personenkraftwagen, dienen im Wesentlichen der Auskleidung und Verschönerung des Innenraums. Hierbei haben sich neben Innenausstattungsteilen, die aus Kunststoff spritzgegossen werden, auch Innenausstattungsteile etabliert, die aus Faserverbundwerkstoffen hergestellt werden. Neben Gewichtsvorteilen, die Innenausstattungsteile aus Faserverbundwerkstoffen gegenüber konventionellen Innenausstattungsteilen aus spritzgegossenen Kunststoffen aufweisen, kommt auch zunehmend zum Tragen, dass ökologischere und nachhaltigere Lösungen zu konventionellen Kunststoffen, die in der Regel auf petrochemischen Substanzen basieren, stärker nachgefragt werden. Innenausstattungsteile, die zum Teil oder auch vollständig aus Faserverbundwerkstoffen ausgebildet sind, weisen daher zunehmend als Faserkomponente zumindest anteilig Naturfasern auf. Die Naturfasern können beispielsweise aus Hanf, Flachs, Kenaf, Sisal oder auch Kokos bestehen.

Es ist weiterhin bekannt, Innenausstattungsteile, die aus Faserverbundstoffen bestehen, entsprechend derart weiter zu bilden, dass die Faserstruktur des Faserverbundstoffes am fertigen Bauteil sichtbar und fühlbar ist.

So beschreibt beispielsweise die EP 2 463 092 A1 ein Formteil mit einer Kernlage umfassend eine Mischung aus Natur- oder Synthesefasern und thermoplastischen Bindefasern, die zu einem Vlies verarbeitet sind, und einer thermoplastischen Decklage in Form einer Folie, wobei die Kernlage und die Decklage miteinander verschmolzen sind und die Decklage so gestaltet ist, dass das Formteil eine Sichtfläche aufweist, die durch die Decklage abgeschlossen wird, wobei das optische Erscheinungsbild der Sichtfläche durch die Fasern der Kernlage zumindest mitgeprägt ist.

Die EP 2 729 289 B1 offenbart ebenfalls ein Formteil aus einem Faserformstoff mit einer Beschichtung aus wenigstens einem polymeren Werkstoff in Form einer Folie, wobei die Oberfläche der Beschichtung durch die Fasern des Faserformstoffs mitgeprägt wird.

Das Dokument US 5 658 511 A1 offenbart ein Verfahren zur Herstellung von Formteilen aus gemischten Zellulose- und Polypropylenfasern.

Es hat sich jedoch in der Praxis gezeigt, dass Folien als Beschichtung für Faserformstoffe eine Vielzahl von Problemen mit sich bringen. So besteht regelmäßig das Problem, dass die Folie nicht gleichmäßig, zu tief oder nicht tief genug in den Faserformstoff eingeprägt wird, so dass keine gleichmäßige Oberflächenqualität sichergestellt werden kann. Dies lässt sich nur durch eine sehr aufwändige und individuelle Auslegung des Presswerkzeugs an die Bauteilgeometrie und eine anschließende empirische Ermittlung der Prozessparameter verhindern, was die Herstellung eines solchen Bauteils deutlich verteuert.

Zwar ist es grundsätzlich auch bekannt, dass man zur Ausbildung einer solchen Dekorschicht anstelle einer Folie einen Lack verwendet, doch besteht insbesondere bei Faserformstoffen aus Naturfasern das Problem, dass es nach der Lackierung zu Blasenbildungen, sogenannten "Kochern" kommt, so dass bisher keine serientauglichen lackierten Innenausstattungsteile bereitgestellt werden konnten, die eine gleichbleibend hohe Oberflächenqualität aufweisen.

### Beschreibung der Erfindung

Eine Aufgabe der Erfindung ist es daher, ein Innenausstattungsteil für ein Fahrzeug und ein Verfahren zu dessen Herstellung bereit zu stellen, um zumindest einen der genannten Nachteile im Stand der Technik zu überwinden.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

Ein erfindungsgemäßes Verfahren zur Herstellung eines Innenausstattungsteils für ein Fahrzeug umfasst zumindest den Schritt des Bereitstellens einer Fasermatte. Die Fasermatte umfasst ein Fasergemisch, das als Hauptbestandteile zumindest Naturfasern und einen schmelzfähigen Kunststoff umfasst. Als Naturfasern können zum Beispiel Hanf, Flachs, Sisal oder Kenaffasern gewählt werden. Der schmelzfähige Kunststoff kann zum Beispiel aus der Gruppe der duroplastischen, thermoplastischen oder biologischen Kunststoffe gewählt sein. Das Mischungsverhältnis von Naturfasern zu Kunststoff kann dabei zwischen 30 zu 70 und 70 zu 30 betragen. Es ist an dieser Stelle besonders bevorzugt, dass der Kunststoff ebenfalls in Form von Fasern der Fasermatte beigemischt ist. Neben den Hauptbestandteilen können weitere Stoffe als Additive der Fasermatte beigemischt sein, die beispielsweise die Beständigkeit, die mechanischen Eigenschaften oder auch designästhetische Eigenschaften, wie die Farbe der Fasermatte beeinflussen.

Weiterhin umfasst das erfindungsgemäße Verfahren zumindest das Erwärmen der Fasermatte auf einen Trocknungstemperaturbereich, wobei der Trocknungstemperaturbereich über eine Trocknungsdauer gehalten wird. Der Trocknungstemperaturbereich ist bevorzugt derart gewählt, dass das in der Fasermatte, insbesondere in den Naturfasern enthaltene Wasser, verdampft. Je nach herrschendem Atmosphärendruck kann der Trocknungstemperaturbereich 90 bis 110 Grad Celsius, bevorzugt 95 bis 105 Grad Celsius, betragen. Der Trocknungstemperaturbereich kann sich dabei auf die Temperatur der Fasermatte beziehen.

Die Trocknungsdauer ist dabei bevorzugt derart gewählt, dass zumindest ein Großteil des in der Fasermatte enthaltenen Wassers entweichen kann. Die Trocknungsdauer beginnt bevorzugt mit Erreichen des Trocknungstemperaturbereichs. Es hat sich gezeigt, dass Trocknungsdauern zwischen 5 bis 30 Sekunden, bevorzugter 10 bis 25 Sekunden besonders geeignete Trocknungsdauern darstellen.

Während des Schrittes des Erwärmens erfolgt zumindest ein Schritt des Verdichtens der Fasermatte. Das Verdichten kann entweder gleichzeitig mit dem Erwärmen beginnen oder auch erst beginnen, nachdem der Schritt des Erwärmens bereits begonnen hat. Während des Verdichtens wird die Fasermatte auf eine Vorverdichtungsdichte verpresst, wobei die Trocknungsdauer vor Erreichen der Vorverdichtungsdichte endet.

Indem die Trocknung noch während des Verdichtens endet, bleibt sichergestellt, dass kein Wasser im Zuge der Verdichtung in der Fasermatte eingeschlossen wird. Weiterhin unterstützt die Verdichtung bei dem Entweichen des Wassers aus der Fasermatte.

Es ist an dieser Stelle bevorzugt, dass die Fasermatte auf eine Vorderdichtungsdichte, die dem 2-fachen bis maximal 4-fachen einer ursprünglichen Dichte der Fasermatte entspricht.

Der Schritt der Verdichtung kann zum Beispiel in einem Presswerkzeug erfolgen, in welches die Fasermatte eingelegt wird. Hierbei kann es vorteilhaft sein, wenn die zum Erwärmen notwendige Wärme über mit der Fasermatte in Kontakt stehende Pressflächen in die Fasermatte eingebracht wird.

Des Weiteren umfasst das erfindungsgemäße Verfahren den Schritt des Erhitzens der Fasermatte über zumindest eine Schmelztemperatur der Kunststoffasern nach Ablauf der Trocknungstemperatur. Der Schritt des Erhitzens beginnt bevorzugt noch während des Verdichtens. Die Schmelztemperatur des Kunststoffs liegt bevorzugt in einem Bereich zwischen 170 bis 230 Grad Celsius, bevorzugt 190 bis 210 Grad Celsius. Durch das Aufschmelzen des Kunststoffs bildet dieser eine Kunststoffmatrix aus, welche die Naturfasern umschließt und nach späterem Aushärten Formstabilität erzeugt.

Unter Schmelztemperatur kann in diesem Zusammenhang die Temperatur verstanden werden, welche der Kunststoff zumindest aufweisen muss, damit dieser in einen fließfähigen Zustand übergeht.

Es sei an dieser Stelle angemerkt, dass unter einem Erreichen einer Temperatur, wie beispielsweise der Schmelztemperatur und/oder das Erreichen eines Temperaturbereichs verstanden werden kann, dass die Fasermatte im Mittel eine solche Temperatur bzw. einen Temperaturbereich aufweist.

Des Weiteren umfasst das erfindungsgemäße Verfahren einen Schritt des Endverdichtens, bei dem die Fasermatte zu einem Faserformteil verpresst wird. Während des Endverdichtens wird die noch formflexible Fasermatte zu einem, bevorzugt verwindungssteifen, Faserformteil verpresst. Es ist an dieser Stelle bevorzugt, dass die Fasermatte unmittelbar nach dem Erhitzen endverdichtet wird und die Fasermatte eine Temperatur aufweist, die größer oder gleich der Schmelztemperatur ist, so dass der Kunststoff in der Fasermatte noch in flüssiger Form vorliegt. Weiterhin ist bevorzugt, dass das Faserformteil nach dem Schritt des Endverdichtens zumindest auf eine Temperatur unterhalb der Schmelztemperatur abkühlt.

In diesem Zusammenhang ist es vorteilhaft, wenn während des Schrittes des Endverdichtens die Fasermatte auf eine Endverdichtungsdichte verdichtet wird, die dem 1,5-fachen bis 2-fachen der Vorverdichtungsdichte entspricht.

In einem Schritt des Auftragens wird eine Haftvermittlerschicht auf zumindest einen Oberflächenabschnitt des Faserformteils aufgetragen. Die Haftvermittlerschicht wird bevorzugt gleichmäßig über den Oberflächenabschnitt aufgetragen. Unter einem Haftvermittler kann in diesem Zusammenhang ein Stoff oder eine Substanz verstanden werden, die eine Verbindung zwischen dem Faserformteil und einer Lackschicht, die auf das Faserformteil aufgetragen wird, unterstützt oder erst möglich macht. Solche Haftvermittler werden insbesondere in der Automobilindustrie auch aus "Primer" bezeichnet. Die Haftvermittlerschicht kann in einem Arbeitsgang aufgetragen werden. Alternativ ist es ebenso möglich, dass die Haftvermittlerschicht in mehreren Arbeitsgängen aufgetragen wird, beispielsweise, in dem die Haftvermittlerschicht in mehreren Teilschichten erzeugt wird.

Die Haftvermittlerschicht wird bevorzugt auf den Oberflächenabschnitt aufgesprüht.

Es ist von Vorteil, wenn die Haftvermittlerschicht auf das Faserformteil aufgetragen wird, wenn das Faserformteil auf Raumtemperatur abgekühlt ist.

Die Haftvermittlerschicht wird bevorzugt in einer Dicke von 10 bis 100 Mikrometer, noch bevorzugter 20 bis 70 Mikrometer auf den Oberflächenabschnitt aufgetragen. Die Haftvermittlerschicht kann dabei zumindest teilweise in das Faserformteil einsinken.

Sobald der Oberflächenabschnitt mit der Haftvermittlerschicht benetzt ist, folgt ein Schritt des Aufbringens einer Lackschicht auf den mit der Haftvermittlerschicht benetzten Oberflächenabschnitt zur Ausbildung einer Dekorschicht. Bei der Lackschicht kann es sich sowohl um ein Einschichtsystem als auch um ein Mehrschichtsystem handeln, das bevorzugt mittels Düse auf den Oberflächenabschnitt aufgetragen wird.

Für die Lackschicht kann beispielsweise ein 2K-Hydro-Lack oder ein UV-Hydrolack verwendet werden.

Durch das erfindungsgemäße Verfahren ist es möglich Faserformteile herzustellen, die mit einer Dekorschicht aus einer Lackschicht versehen sind. Durch das definierte Trocknen in einem definierten Trocknungstemperaturbereich über eine definierte Trocknungsdauer während des Schrittes des Erwärmens und des zumindest zeitweise gleichzeitigen Verdichtens, kann sichergestellt werden, dass sich die Oberflächenqualität am späteren lackierten Bauteil deutlich verbessert. Dies begründet sich im Wesentlichen darin, dass durch die Trocknung das in der Fasermatte enthaltene Wasser entweicht, was durch die zumindest zeitweise parallele Verdichtung unterstützt wird. Gleichzeitig wird durch das anschließende Erhitzen auf die Schmelztemperatur des Kunststoffes sichergestellt, dass die Naturfasern möglichst vollständig vom flüssigen Kunststoff ummantelt werden, so dass die Naturfasern auch nach der Herstellung nur sehr wenig oder im Idealfall kein Wasser aufnehmen können. Auf diese Weise wird es möglich, das Auftreten von Kochern und Verunreinigungen auf dem Faserformteil nach dem späteren Lackieren deutlich zu reduzieren und die Oberflächenqualität deutlich zu steigern.

Es hat sich als vorteilhaft erwiesen, wenn für das erfindungsgemäße Verfahren eine ursprüngliche Dichte der Fasermatte bevorzugt in einem Bereich zwischen 0,1 g/cm³ bis 0,25 g/cm³ liegt und während des Schrittes des Endverdichtens die Endverdichtungsdichte in einem Bereich zwischen 0,4 bis 0,8 g/cm³, bevorzugter 0,5 bis 0,7 g/cm³ verdichtet wird. Weiterhin ist es vorteilhaft, wenn die Fasermatte auf eine Vorverdichtungsdichte in einem Bereich zwischen 0,2 g/cm³ bis 0,3 g/cm³ während des Schrittes des Verdichtens verdichtet wird. Es hat sich gezeigt, dass in den genannten Dichteverhältnissen Faserformteile erzeugbar sind, die den mechanischen Anforderungen an Innenausstattungsteilen gerecht werden und gleichzeitig eine hohe Dekorschichtqualität erzielbar ist.

Weiterhin kann es von Vorteil sein, wenn die Schmelztemperatur des schmelzfähigen Kunststoffs erreicht wird, noch bevor die Fasermatte auf die Vorverdichtungsdichte verdichtet wird. Es ist besonders bevorzugt, dass die Fasermatte die Schmelztemperatur erreicht, wenn diese eine Dichte aufweist, die größer ist als die ursprüngliche Dichte der Fasermatte, jedoch kleiner ist als die Vorverdichtungsdichte. Dies bietet den Vorteil, dass die bereits während des Verdichtens der flüssig werdende Kunststoff die Naturfasern umschließt und möglichst wenig Hohlräume zwischen den Fasern zurückbleiben.

In einer Ausführungsform des erfindungsgemäßen Verfahrens kann zumindest während des Schrittes des Erwärmens die Fasermatte mit einer, bevorzugt konstanten, Heizwärme beaufschlagt werden deren Temperatur zumindest über dem Trocknungstemperaturbereich liegt. Auf diese Weise kann auf einfache Weise ein sehr effizienter und insbesondere fließender Übergang zwischen dem Schritt der Erwärmung zur Trocknung der Matte und dem Schritt des Erhitzens der Fasermatte zur Verflüssigung des Kunststoffes erreicht werden. Die Fasermatte wird bevorzugt zumindest während des Schrittes des Verdichtens und während des Schrittes des Erhitzens mit der Heiztemperatur beaufschlagt.

Sofern die Fasermatte mit einer konstanten Heizwärme beaufschlagt wird, ist es bevorzugt, dass über eine die Verdichtung beeinflussende Regelgröße die Fasermatte auf eine Temperatur innerhalb des Trocknungstemperaturbereichs gebracht und/oder gehalten wird. Da eine Fasermatte aufgrund ihrer Beschaffenheit eine poröse Struktur aufweist, kann die Wärmeleitung und somit auch die Temperatur der Fasermatte beispielsweise über die Geschwindigkeit der Verdichtung gesteuert werden. Soll beispielsweise ein schneller Temperatureintrag in die Fasermatte erfolgen, kann durch ein schnelleres Verdichten der Matte die Wärmeleitfähigkeit verbessert werden, da die Porosität dadurch abnimmt. Eine alternative Regelgröße kann beispielsweise der Druck sein, mit dem die Fasermatte zur Verdichtung beaufschlagt wird.

Die Verdichtung der Fasermatte während des Schrittes des Verdichtens kann stufenweise oder auch dynamisch erfolgen. Unter stufenweiser Verdichtung kann in diesem Zusammenhang verstanden werden, dass die Fasermatte nicht sofort auf die Vorverdichtungsdichte verdichtet wird, sondern dass die Fasermatte in mehreren Teilverdichtungsschritten auf die Vorverdichtungsdichte gebracht wird. Diese Teilverdichtungsschritte können beispielsweise sinnvoll sein, um die Fasermatte auf eine bestimmte Temperatur zu erwärmen, so dass erst der nächste Teilverdichtungsschritt durchgeführt wird, wenn eine Zeitdauer, beispielsweise auch die Trocknungsdauer, abgelaufen oder eine Temperatur erreicht ist.

Unter einer dynamischen Verdichtung kann in diesem Zusammenhang verstanden werden, dass die Geschwindigkeit mit der die Fasermatte verdichtet wird variiert um eine zeitweise schnellere oder eine zeitweise langsamere Verdichtung der Fasermatte bis zum Erreichen der Vorverdichtungsdichte zu erzielen.

Je nach Anforderung an das Innenausstattungsteil können unterschiedliche Strukturen im Oberflächenabschnitt gewünscht sein. Es kann daher von Vorteil sein, vor dem Schritt des Verdichtens oder vor dem Schritt des Endverdichtens eine Strukturschicht zumindest im Bereich des Oberflächenabschnitts anzuordnen, um eine definierte Oberflächenstruktur im Oberflächenabschnitt zu erzeugen. Die Strukturschicht kann je nach Beschaffenheit und Zusammensetzung auch bereits vor dem Erwärmen auf der Fasermatte positioniert werden. Bevorzugt besteht die Strukturschicht aus einem textilen Flächengebilde, wie zum Beispiel einem Gewebe, Gewirke oder einem Gestrick. Es ist jedoch auch möglich eine Strukturschicht mit möglichst glatter Oberfläche zu verwenden. Dies kann beispielsweise mit einer Zelluloseschicht erfolgen. Die Strukturschicht kann über einen Klebstoff, der insbesondere wärmeaktivierbar ist, während des Schrittes des Erwärmens oder des Erhitzens mit der Fasermatte oder dem Faserformteil verbunden werden. Alternativ ist es jedoch auch möglich, dass auf einen zusätzlichen Klebstoff verzichtet wird und die Strukturschicht über den schmelzfähigen Kunststoff mit der Fasermatte verbunden wird. Weiterhin kann die Strukturschicht auch mechanisch mit der Fasermatte verbunden werden. Beispielsweise kann die Strukturschicht mit der Fasermatte vernadelt werden.

Es hat sich gezeigt, dass nach dem Verpressen zum Formteil der Oberflächenabschnitt Verunreinigungen und unerwünschte Oberflächenbeschaffenheiten aufweisen kann. Es kann daher bevorzugt sein, vor und/oder nach dem Schritt des Auftragens der Oberfläche mit Haftvermittler ein Schritt des Glättens zumindest des Oberflächenabschnitts vorzusehen. Es hat sich herausgestellt, dass sich zum Glätten das Schleifen und das Beflammen auch in Kombination als besonders geeignet gezeigt haben. Dabei kann es vorteilhaft sein, den Schritt des Glättens und den Schritt des Auftragens mehrfach hintereinander zu wiederholen, um die Oberflächenqualität weiterhin zu erhöhen.

Es kann vorteilhaft sein, nach dem Glätten den Oberflächenabschnitt mit zu reinigen, um eventuelle Rückstände vom Glätten zu entfernen. Dies kann beispielsweise mit Luftdruck und/oder Ionisierung erfolgen. Ebenso hat sich das CO₂-Schneestrahlen als geeignetes Reinigungsverfahren herausgestellt

Sofern ein Schritt des Glättens erfolgt kann es dabei von Vorteil sein, vor dem Schritt des Glättens ein Schritt des Benetzens vorzusehen, indem zumindest der Oberflächenabschnitt mit einem Fluid, insbesondere Wasser oder Wasserdampf benetzt wird. Insbesondere bei der Verwendung von Pflanzenfasern als Naturfasern, kann das Benetzen dazu dienen, dass Pflanzenfasern, die nicht richtig im Kunststoff gebunden sind, das Wasser aufnehmen und sich leicht aufstellen, so dass diese während des Glättens abgetragen werden können, was die Oberflächenqualität zusätzlich verbessert. Es ist an dieser Stelle jedoch bevorzugt, dass das Fluid auf den Oberflächenabschnitt aufgesprüht wird oder der Oberflächenabschnitt mit dem Fluid eingenebelt wird, damit möglichst wenig Fluid in das Faserformteil eingetragen wird.

Um zu verhindern, dass über den Oberflächenabschnitt Feuchtigkeit, zum Beispiel über den Lack oder über spätere Umwelteinflüsse in das Faserformteil, gelangen kann, ist es von Vorteil, wenn die Haftvermittlerschicht mithilfe eines aushärtbaren Haftvermittlers ausgebildet wird. Hierbei kann es sich zum Beispiel um einen Sperrprimer, beispielsweise einen 2K-Hydro Primer, oder einen UV-Primer, beispielsweise einem UV-Hydro-Primer oder einem UV/2K-Dualcure Primer handeln. Es ist in diesem Zusammenhang besonders bevorzugt, dass der aushärtbare Haftvermittler den Oberflächenabschnitt dabei bevorzugt fluiddicht verschließt.

In Bezug auf den Trocknungstemperaturbereich hat es sich gezeigt, dass der Trocknungstemperaturbereich zwischen 90 bis 110 Grad Celsius, bevorzugter 95 bis 105 Grad Celsius je nach Umgebungsdruck gewählt wird. Hierbei ist besonders bevorzugt den Trocknungstemperaturbereich anhand des Umgebungsdrucks auf die Siedetemperatur von Wasser einzustellen, die bei dem entsprechenden Umgebungsdruck vorherrscht.

Für die Trocknungsdauer hat sich gezeigt, dass eine Dauer von 5 bis 30 Sekunden, bevorzugter 10 bis 25 Sekunden ein besonders wirtschaftlicher Kompromiss darstellt.

Neben dem erfindungsgemäßen Verfahren umfasst die Erfindung auch ein Innenausstattungsteil für ein Fahrzeug, dass gemäß dem beschriebenen Verfahren hergestellt ist. Das Innenausstattungsteil umfasst ein Faserformteil, eine Haftvermittlerschicht und eine Lackschicht. Das Faserformteil umfasst darüber hinaus einen Oberflächenabschnitt, auf der die Haftvermittlerschicht zumindest teilweise angeordnet ist. Auf der Haftvermittlerschicht ist, bevorzugt auf einer dem Oberflächenabschnitt gegenüberliegenden Seite, die Lackschicht angeordnet. Die Lackschicht bildet dabei eine Dekorschicht aus.

Es ist an dieser Stelle bevorzugt, dass die Haftvermittlerschicht die Lackschicht mit dem Oberflächenabschnitt zwar verbindet, jedoch Lackschicht und Oberflächenabschnitt nicht direkt miteinander in Kontakt treten.

Weiterhin ist es bevorzugt, dass das Faserformteil eine Sichtseite ausbildet, die im Einbauzustand des Innenausstattungsteils für den Fahrzeuginsassen wahrnehmbar ist, wobei der Oberflächenabschnitt zumindest abschnittsweise im Bereich der Sichtseite angeordnet ist.

Der Oberflächenabschnitt kann eine Oberflächenstruktur aufweisen, die sich zumindest teilweise auf die Lackschicht überträgt, so dass die Oberflächenstruktur zumindest teilweise auf der Lackschicht haptisch und/oder optisch wahrnehmbar ist. Die Oberflächenstruktur kann durch die Struktur der Fasern des Faserformteils erzeugt sein. Alternativ kann die Oberflächenstruktur auch in den Oberflächenabschnitt eingebracht sein. Dies kann beispielsweise über Prägen erfolgen.

Ebenso ist es möglich, dass das Faserformteil eine Strukturschicht aufweist, die die Oberflächenstruktur zumindest anteilig ausbildet. Die Strukturschicht ist bevorzugt durch ein textiles Flächengebilde, insbesondere ein Gelege, Gewebe, Gestrick oder Gewirke ausgebildet, wobei sich bevorzugt die Textilstruktur des Flächengebildes unter der Lackschicht abzeichnet.

Es hat sich des Weiteren gezeigt, dass es von Vorteil ist, wenn die Lackschicht eine mittlere Dicke von 10 bis 100 µm aufweist. Innerhalb dieses Bereichs ist sichergestellt, dass sich die Oberflächenstruktur des Faserformteils abzeichnet und gleichzeitig eine geschlossene und strapazierfähige Lackschicht erzeugt wird. Zusätzlich kann auf der der Haftvermittlerschlicht abgewandten Seite der Lackschicht eine zusätzliche Schutzschicht angeordnet sein.

Neben dem erfindungsgemäßen Verfahren und dem erfindungsgemäßen Innenausstattungsteil umfasst die Erfindung ein Fahrzeug mit einem erfindungsgemäßen Innenausstattungsteil.

Die Erfindung wurde mit Bezug auf ein Verfahren sowie eine Vorrichtung beschrieben. Sofern nichts anderes angegeben ist, sind die Ausführungen zum Verfahren analog auf die Vorrichtung anwendbar. Dasselbe gilt natürlich in der umgekehrten Richtung, so dass auch die Ausgestaltungen der Vorrichtung ihren Niederschlag im Verfahren finden.

Darüber hinaus sind weitere Vorteile und Merkmale der vorliegenden Erfindung aus der folgenden Beschreibung bevorzugter Ausführungsformen ersichtlich. Die dort und oben beschriebenen Merkmale können alleinstehend oder in Kombination umgesetzt werden, insofern sich die Merkmale nicht widersprechen. Die folgende Beschreibung der bevorzugten Ausführungsform erfolgt dabei unter Bezugnahme auf die begleitenden Zeichnungen.

### Kurze Figurenbeschreibung

Darüber hinaus sind weitere Vorteile und Merkmale der vorliegenden Erfindung aus der folgenden Beschreibung bevorzugter Ausführungsformen ersichtlich. Die dort und oben beschriebenen Merkmale können alleinstehend oder in Kombination umgesetzt werden, insofern sich die Merkmale nicht widersprechen. Die folgende Beschreibung bevorzugter Ausführungsformen erfolgt dabei unter Bezugnahme auf die begleitenden Zeichnungen. Dabei zeigen:
- Figur 1: ein Ablaufdiagramm eines Ausführungsbeispiels des erfindungsgemäßen Verfahrens;
- Figuren 2a bis 2g: ein weiteres Ausführungsbeispiel eines erfindungsgemäßen Verfahrens;
- Figur 3: ein Ausführungsbeispiel einer Aufheizkurve während eines Prozessschrittes des erfindungsgemäßen Verfahrens;
- Figur 4: eine vergrößerte Schnittansicht eines Ausführungsbeispiels eines erfindungsgemäßen Innenausstattungsteils; und
- Figur 5: ein Kraftfahrzeug mit einem Ausführungsbeispiel eines erfindungsgemäßen Innenausstattungsteils.

Die Figuren sind lediglich schematische Darstellungen und dienen nur der Erläuterung der Erfindung. Gleiche oder gleichwirkende Elemente sind durchgängig mit den gleichen Bezugszeichen versehen.

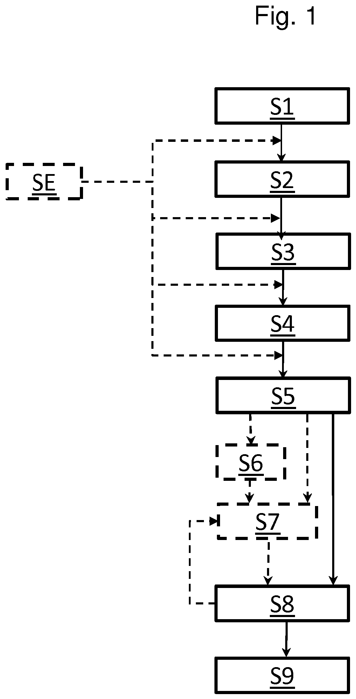

Figur 1 stellt ein Prozessdiagramm eines ersten Ausführungsbeispiels eines erfindungsgemäßen Verfahrens dar. Jeder Prozessschritt (S1 bis S9; SE) stellt dabei einen Verfahrensschritt der Ausführungsform des erfindungsgemäßen Verfahrens dar.

Im ersten Ausführungsbeispiel beginnt das Verfahren mit dem Bereitstellen S1 einer Fasermatte. Die Fasermatte umfasst als Hauptbestandteile Naturfasern, die im vorliegenden Ausführungsbeispiel aus Kenaf bestehen und einem schmelzfähigen Kunststoff, der im vorliegenden Ausführungsbeispiel aus Polypropylen ausgebildet ist. Der Kunststoff liegt ebenfalls in Faserform vor und ist homogen mit den Naturfasern gemischt.

Dem Bereitstellen S1 der Fasermatte schließt sich das Erwärmen der Fasermatte S2 an. In diesem Schritt wird die Fasermatte durch Beaufschlagung mit einer Heizwärme auf einen Trocknungstemperaturbereich erwärmt. Sobald die Fasermatte eine Temperatur aufweist, die innerhalb des Trocknungstemperaturbereiches liegt, wird die Temperatur über eine Trocknungsdauer konstant gehalten. Im vorliegenden Ausführungsbeispiel beträgt der Trocknungstemperaturbereich 95 bis 105 Grad Celsius, wobei die Fasermatte auf eine Temperatur von 99 Grad erwärmt wird. Die Trocknungsdauer beträgt im vorliegenden Ausführungsbeispiel 20 Sekunden.

Dem Erwärmen S2 der Fasermatte schließt sich im vorliegenden Ausführungsbeispiel das Verdichten S3 der Fasermatte an. Während des Verdichtens S3 wird die Fasermatte auf eine Vorverdichtungsdichte verdichtet. Der Schritt des Verdichtens S3 beginnt dabei schon während des Schrittes des Erwärmens S2, wobei die Trocknungsdauer vor Erreichen der Vorverdichtungsdichte endet. Die Fasermatte wird also noch nach dem Ablauf der Trocknungsdauer weiter zur Vorverdichtungsdichte verdichtet.

Nachdem die Fasermatte auf die Vorverdichtungsdichte verdichtet wurde, erfolgt ein Schritt des Erhitzens S4 der Fasermatte über die Schmelztemperatur des schmelzfähigen Kunststoffs, der in der Fasermatte enthalten ist. Im vorliegenden Ausführungsbeispiel wird die Fasermatte hierzu auf 180 Grad aufgeheizt, da als Kunststoff Polypropylen vorliegt. Das Erhitzen S4 der Fasermatte über die Schmelztemperatur erfolgt in diesem Zusammenhang erst nachdem die Trocknungsdauer geendet ist.

Im vorliegenden Ausführungsbeispiel wird nun durch einen Schritt des Ablegens SE eine Strukturschicht auf der Fasermatte abgelegt. Die Strukturschicht besteht im vorliegenden Ausführungsbeispiel aus einem Kenaf-Gewebe. Es sei an dieser Stelle angemerkt, dass es je nach Prozessbedingungen auch möglich ist den Schritt des Ablegens SE der Strukturschicht auf der Fasermatte vor dem Erwärmen S2, vor dem Verdichten S3 oder auch vor dem Erhitzen S4 durchzuführen.

Nach dem Ablegen SE der Strukturschicht auf der Fasermatte wird im vorliegenden Ausführungsbeispiel in einem Schritt des Endverdichtens S5 die Fasermatte zu einem Faserformteil geformt. Im vorliegenden Ausführungsbeispiel wird im Zuge des Endverdichtens S5 eine Türverkleidung für einen Personenkraftwagen geformt, wobei die dreidimensionale Form der Türverkleidung bereits im Zuge des Endverdichtens (S5) erzeugt wird.

Im vorliegenden Ausführungsbeispiel erfolgen die Schritte des Ablegens SE der Strukturschicht und des Endverdichtens S5 unmittelbar nach dem Schritt des Erhitzens S4, so dass während des Endverdichtens die Fasermatte noch eine Temperatur aufweist, die zumindest der Schmelztemperatur des Kunststoffes entspricht.

Nach dem Endverdichten S5 erfolgt im vorliegenden Ausführungsbeispiel ein Schritt des Benetzens S6 eines Oberflächenabschnitts des Faserformteils mit einem Fluid, bei dem das Fluid auf den Oberflächenabschnitt aufgetragen wird. Im vorliegenden Ausführungsbeispiel wird als Fluid Wasser verwendet, das auf den Oberflächenabschnitt aufgesprüht wird. Der Schritt des Benetzens S6 erfolgt im vorliegenden Ausführungsbeispiel erst nachdem das Faserformteil auf eine Raumtemperatur abgekühlt ist.

Dem Schritt des Benetzens S6 schließt sich ein Schritt des Glättens S7 an, in dem das Faserformteil zumindest abschnittsweise im Oberflächenabschnitt behandelt wird, um Oberflächenverunreinigungen und/oder unerwünschte Oberflächenunebenheiten zu beseitigen. Im vorliegenden Ausführungsbeispiel erfolgt das Glätten S7 durch eine Kombination aus Beflammen und Schleifen des Oberflächenabschnitts.

Nach dem Glätten S7 erfolgt ein Schritt des Auftragens S8 einer Haftvermittlerschicht zumindest im Oberflächenabschnitt des Faserformteils. Im vorliegenden Ausführungsbeispiel wird ein aushärtender UV-Primer in mehreren Teilschichten auf den Oberflächenabschnitt aufgesprüht.

Nach dem Auftragen S8 und Aushärten jeder Teilschicht erfolgt im vorliegenden Ausführungsbeispiel ein erneuter Schritt des Glättens S7 durch Schleifen. Die Teilschichten bilden abschließend gemeinsam die Haftvermittlerschicht aus. Im vorliegenden Ausführungsbeispiel weist die Haftvermittlerschicht eine mittlere Dicke von 60 Mikrometern auf.

Es sei an dieser Stelle angemerkt, dass die Schritte des Benetzens S6 und des Glättens S7 lediglich optional sind. Grundsätzlich kann nach dem Schritt des Endverdichtens S5 der Schritt des Auftragens des Haftvermittlers S8 erfolgen. Es hängt von der angestrebten Oberflächenqualität des Faserformteils im Bereich des Oberflächenabschnitts ab, ob ein Benetzen S6 und ein Glätten S7 erforderlich ist.

Nach dem Auftragen S8 der Haftvermittlerschicht auf dem Faserformteil erfolgt ein Schritt des Aufbringens S9 einer Lackschicht auf den mit der Haftvermittlerschicht bedeckten Oberflächenabschnitt zur Ausbildung einer Dekorschicht. Die Lackschicht wird in einer mittleren Dicke von 70 Mikrometern auf die Haftvermittlerschicht aufgetragen, wobei die Lackschicht keinen direkten Kontakt mit dem Faserformteil hat und lediglich über die Haftvermittlerschicht mit dem Faserformteil verbunden ist.

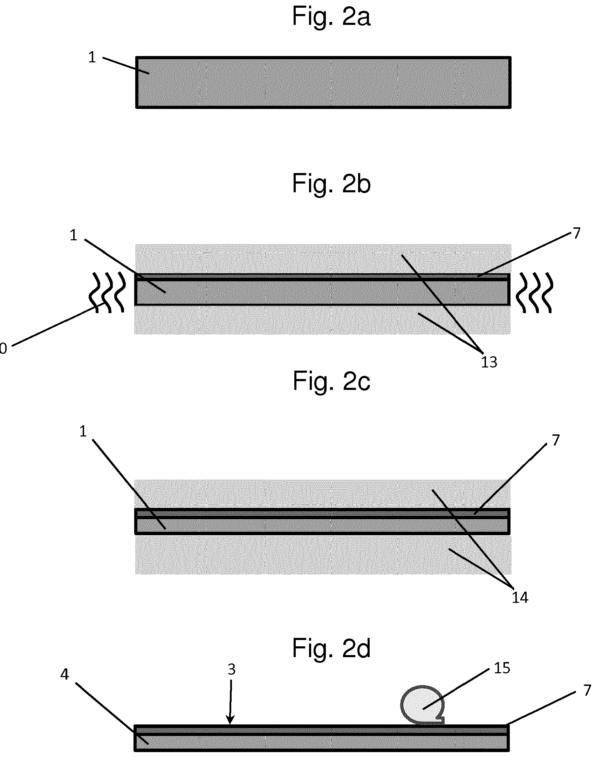

Figuren 2a bis 2g zeigen eine weitere Ausführungsform des erfindungsgemäßen Verfahrens zur Herstellung eines erfindungsgemäßen Innenausstattungsteils 8. Figur 2a zeigt dabei die Fasermatte 1 mit einer Dichte von 0,15 g/cm³. Die Fasermatte 1 besteht im vorliegenden Ausführungsbeispiel aus Naturfasern aus Hanf und Flachs und Polypropylenfasern. Das Mischungsverhältnis zwischen Naturfasern und Polypropylenfasern beträgt hierbei 50 zu 50. Die Naturfasern und die Polypropylenfasern sind hierbei gleichmäßig über die Matte verteilt.

Auf die Fasermatte 1 wird eine Strukturschicht 7 abgelegt, wobei die Fasermatte 1 gemeinsam mit der Strukturschicht 7 in einer Vorverdichtungseinrichtung 13 abgelegt, erwärmt und vorverdichtet werden. Dies ist in Figur 2b dargestellt. Im Vorliegenden Ausführungsbeispiel besteht die Strukturschicht 7 aus einem Leinengewebe. Die Vorverdichtungseinrichtung 13 verfügt über zwei beheizbare Kontaktflächen 13.1; 13.2, wobei die Fasermatte 1 auf eine der Kontaktflächen 13.1 abgelegt wird. Die Strukturschicht 7 ist dabei auf der der Kontaktfläche 13.1 abgewandten Seite der Fasermatte 1 angeordnet. Die Kontaktflächen 13.1 und 13.2 werden im vorliegenden Ausführungsbeispiel auf 200 Grad Celsius beheizt und aufeinander zubewegt, so dass die Fasermatte 1 und die Strukturschicht 7 zwischen den Kontaktflächen 13.1 und 13.2 verdichtet werden. Da die Kontaktflächen 13.1 und 13.2 beheizt sind, wirkt zusätzlich eine Heizwärme 10 auf die Fasermatte 1 und auf die Strukturschicht 7 ein, was die Temperatur der Fasermatte 1 und der Strukturschicht 7 ansteigen lässt.

Die Fasermatte 1 und die Strukturschicht 7 werden auf eine Temperatur von 99 Grad Celsius erwärmt, die innerhalb des Trocknungstemperaturbereichs liegt, der sich im vorliegenden Ausführungsbeispiel von 97 bis 102 Grad erstreckt. Die Fasermatte 1 und die Strukturschicht 7 werden über die Trocknungsdauer von 22 Sekunden innerhalb des Trocknungstemperaturbereichs gehalten.

Während der Erwärmung, werden die Fasermatte 1 und der Strukturschicht 7 stetig verdichtet. Wobei über die Geschwindigkeit der Verdichtung gleichzeitig das Aufheizverhalten der Fasermatte 1 und der Strukturschicht 7 beeinflusst wird. Da sowohl die Fasermatte 1 als auch die Strukturschicht 7 durch ihre Beschaffenheit Hohlräume aufweisen, kann die Wärmeleitung durch das Verdichten beeinflusst werden. So kann beispielsweise vermieden werden, dass Bereiche der Fasermatte 1, die direkt mit der beheizten Kontaktfläche 13.1 in Kontakt stehen, zu stark erwärmt werden, während innen liegende Teile der Fasermatte 1 deutlich weniger erwärmt sind.

Die Einhaltung des Trocknungstemperaturbereichs über die Trocknungsdauer wird im vorliegenden Ausführungsbeispiel dadurch unterstützt, dass bei Erreichen des Trocknungstemperaturbereichs das in den Naturfasern gebundene Wasser entweicht und verdampft. Insbesondere die Änderung des Aggregatzustandes des Wassers trägt dazu bei, dass die Temperatur über einen gewissen Zeitpunkt nicht weiter ansteigt.

Im vorliegenden Ausführungsbeispiel erfolgt die Verdichtung dynamisch. Die Geschwindigkeit, mit welcher der Verbund aus Strukturschicht 7 und Fasermatte 1 zur Vorverdichtungsdichte hin erfolgt, variiert dabei. Dies ist im vorliegenden Ausführungsbeispiel regelbar in dem der Weg, den die Kontaktflächen 13.1 und 13.2 in einer bestimmten Zeitdauer zurücklegen, unterschiedlich eingestellt wird. So wird die Fasermatte 1 und die Strukturschicht 7 bis zum Erreichen des Trocknungstemperaturbereichs schneller verdichtet als während der Trocknungsdauer.

Die Trocknungsdauer endet vor dem Erreichen der Vorverdichtungsdichte, wobei im vorliegenden Ausführungsbeispiel unmittelbar nach dem Ablauf der Trocknungsdauer die Fasermatte 1 und die Strukturschicht 7 über die Schmelztemperatur der Polypropylenfasern auf 200 Grad erhitzt werden. Die Vorverdichtungsdichte ist zu diesen Zeitpunkt noch nicht erreicht. Der verflüssigte Kunststoff bildet eine Kunststoffmatrix aus, der die Naturfasern umschließt.

Zusätzlich gelangt im vorliegenden Ausführungsbeispiel ein Teil der Kunststoffmatrix in Kontakt mit der Strukturschicht 7.

Sobald die Fasermatte 1 zusammen mit der Strukturschicht 7 auf die Vorverdichtungsdichte gebracht wurde, wird die Fasermatte 1 zusammen mit der Strukturschicht 7 in eine Endverdichtungseinrichtung 14 eingelegt, wie in Fig 2c dargestellt. Im vorliegenden Ausführungsbeispiel erfolgt das Einlegen in die Endverdichtungseinrichtung 14 unmittelbar nach dem Entnehmen aus der Vorverdichtungseinrichtung 13, so dass der Kunststoff in der Fasermatte 1 noch in flüssiger Form vorliegt. Im vorliegenden Ausführungsbeispiel ist die Endverdichtungseinrichtung 14 auf 40 Grad Celsius temperiert. Innerhalb der Endverdichtungseinrichtung 14 wird die Fasermatte 1 zu dem Faserformteil 4 verpresst, das als zusätzliche Schicht die Strukturschicht 7 umfasst, die stoffschlüssig über die Kunststoffmatrix mit dem Faser-Kunststoffgemisch verbunden ist. Im vorliegenden Ausführungsbeispiel stellt das Faserformteil 4 ein Trägerelement für eine Seitenflanke einer Mittelkonsole dar.

Nachdem das Faserformteil 4 erkaltet ist, wird dieses im vorliegenden Ausführungsbeispiel der Endverdichtungseinrichtung 14 entnommen. Wie in Fig. 2d gezeigt, erfolgt anschließend ein Glätten des Oberflächenabschnitts 3 des Faserformteils 4 mit Hilfe einer Schleifvorrichtung 15. Zwar wird der Oberflächenabschnitt 3 im vorliegenden Ausführungsbeispiel im Wesentlichen durch die Strukturschicht 7 geprägt, doch können prozessbedingt Unebenheiten und Verschmutzungen vorliegen, die mit Hilfe der Schleifvorrichtung 15 entfernt werden.

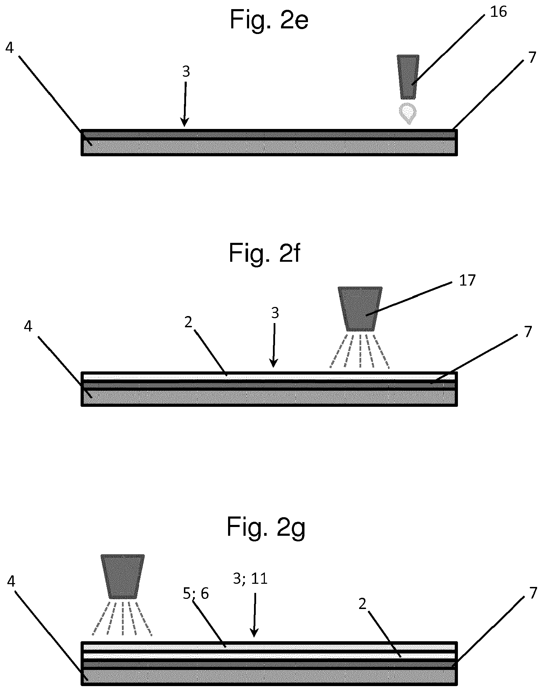

Nach dem Schleifen erfolgt im vorliegenden Ausführungsbeispiel eine Beflammung des Faserformteils 4 im Oberflächenabschnitt 3 mithilfe einer Beflammvorrichtung 16, wie in Figur 2e gezeigt ist. Durch das Beflammen werden im vorliegenden Ausführungsbeispiel Naturfasern, die nicht durch das Schleifen abgetragen wurden, jedoch von dem Oberflächenabschnitt 3 abstehen, abgebrannt, um die Oberflächenqualität weiterhin zu erhöhen. Die Beflammvorrichtung 16 verfährt dabei über den Oberflächenabschnitt 3, so dass einzelne Bereiche des Oberflächenabschnitts 3 nur über eine kurze Zeitdauer der Beflammung ausgesetzt sind, so dass Beschädigungen vermieden werden.

Im vorliegenden Ausführungsbeispiel erfolgt ein Glätten des Oberflächenabschnitts 3 somit durch eine Kombination aus Schleifen und Beflammen.

Wie in Figur 2f gezeigt, erfolgt nach dem Beflammen das Auftragen der Haftvermittlerschicht 2 mit Hilfe einer ersten Auftragsvorrichtung 17. Die erste Auftragsvorrichtung 17 wird im vorliegenden Ausführungsbeispiel durch einen Flächensprühkopf ausgebildet. Die erste Auftragsvorrichtung 17 verteilt die Haftvermittlerschicht 2 gleichmäßig auf den Oberflächenabschnitt 3. Im vorliegenden Ausführungsbeispiel wird die Haftvermittlerschicht 2 in einer mittleren Dicke von 70 Mikrometern auf den Oberflächenabschnitt 3 aufgetragen. Als Haftvermittler wird dabei ein 2K-Hydro-Dualcure-Primer verwendet, der nach dem Auftragen auf dem Oberflächenabschnitt 3 aushärtet und den Oberflächenabschnitt 3 fluiddicht verschließt.

Sobald die Haftvermittlerschicht 2 vollständig ausgehärtet ist, wird im vorliegenden Ausführungsbeispiel die Lackschicht 5 auf der Haftvermittlerschicht 2 mit Hilfe einer zweiten Auftragsvorrichtung 18 in einer mittleren Dicke von 80 Mikrometern aufgetragen. Dies ist in Figur 2g gezeigt. Auch die zweite Auftragsvorrichtung 18 ist im vorliegenden Ausführungsbeispiel als Flächensprühkopf ausgebildet. Die Lackschicht 5 bildet die Dekorschicht 6 auf dem Oberflächenabschnitt 3 aus. Der Oberflächenabschnitt 3 weist eine Oberflächenstruktur auf, die im vorliegenden Ausführungsbeispiel im Wesentlichen durch die Strukturschicht 7 geprägt ist. Diese Oberflächenstruktur überträgt sich auch auf die Lackschicht 5, so dass die Oberflächenstruktur zumindest teilweise auf der Lackschicht 5 haptisch und optisch wahrnehmbar ist.

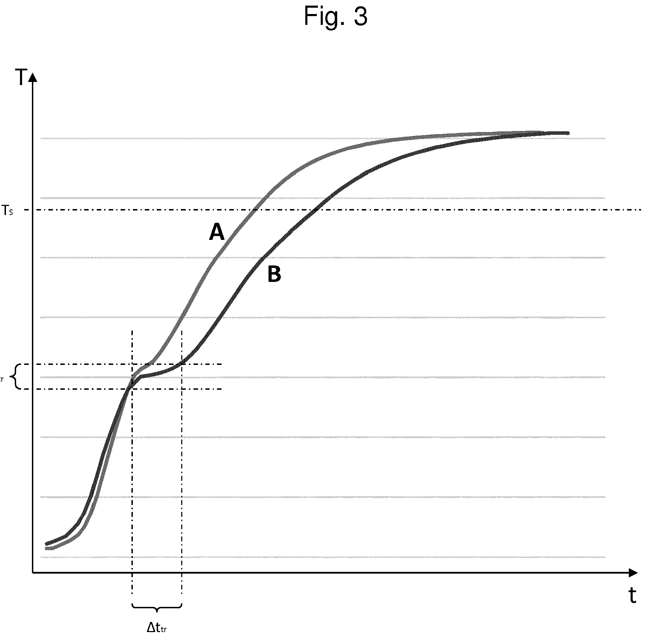

Figur 3 zeigt in einem Temperatur-Zeit-Diagramm zwei Aufheizkurven von Fasermatten. Dabei zeigt Kurve A ein konventionelles Aufheizen der Fasermatte, wobei Kurve B ein erfindungsgemäßes Aufheizen darstellt. Innerhalb des Trocknungstemperaturbereichs ΔTₜᵣ flacht Kurve B gegenüber der Kurve A deutlich ab. Das Abflachen der Kurve B entspricht im Wesentlichen der Trocknungsdauer Δtₜᵣ, in der die Temperatur in der Fasermatte möglichst wenig ansteigt. Nach Ablauf der Trocknungsdauer Δtₜᵣ nimmt die Temperatur der Fasermatte zu und überschreitet die Schmelztemperatur T_{S} des in der Fasermatte enthaltenden schmelzfähigen Kunststoffs.

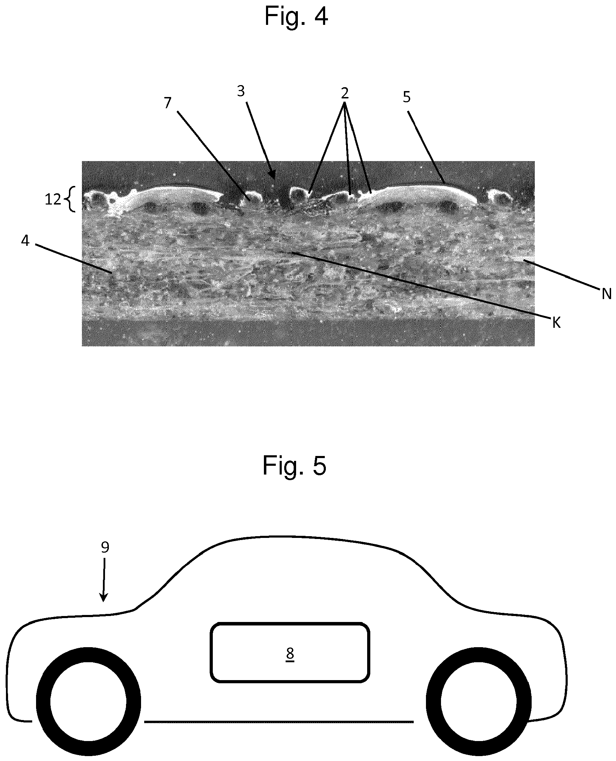

Figur 4 zeigt eine vergrößerte Schnittansicht einer Ausführungsform eines erfindungsgemäßen Innenausstattungsteils. Das Faserformteil 4 setzt sich im vorliegenden Ausführungsbeispiel aus Naturfasern N aus Kenaf und einer Kunststoffmatrix K zusammen, die die Naturfasern N umschließt. Auf dem Faserformteil 4 ist eine Strukturschicht 7 angeordnet, die eine definierte Oberflächenstruktur 12 im Oberflächenabschnitt 3 erzeugt. Die Haftvermittlerschicht 2 ist auf dem Oberflächenabschnitt 3 und teilweise in der Strukturschicht 7 und in dem Faserformteil 4 eingelagert. Auf der Haftvermittlerschicht 2 ist darüber hinaus eine Lackschicht 5 angeordnet, die über die Haftvermittlerschicht 2 mit dem Faserformteil 4 und der Strukturschicht 7 verbunden ist.

Figur 5 zeigt ein Ausführungsbeispiel eines Fahrzeuges 9 mit einem erfindungsgemäßen Innenausstattungsteil 8. Das Fahrzeug 9 stellt im vorliegenden Ausführungsbeispiel einen Personenkraftwagen dar.

Die mit Bezug auf die Figuren gemachten Erläuterungen sind rein illustrativ und nicht beschränkend zu verstehen.

### BEZUGSZEICHENLISTE

- 1: Fasermatte
- 2: Haftvermittlerschicht
- 3: Oberflächenabschnitt
- 4: Faserformteil
- 5: Lackschicht
- 6: Dekorschicht
- 7: Strukturschicht
- 8: Innenausstattungsteil
- 9: Fahrzeug
- 10: Heizwärme
- 11: Sichtseite
- 12: Oberflächenstruktur
- 13: Vorverdichtungseinrichtung
- 13.1: Kontaktfläche
- 13.2: Kontaktfläche
- 14: Endverdichtungseinrichtung
- 15: Schleifvorrichtung
- 16: Beflammvorrichtung
- 17: erste Auftragsvorrichtung
- 18: zweite Auftragsvorrichtung
- N: Naturfasern
- K: Kunststoff
- ΔTₜᵣ: Trocknungstemperaturbereich
- Δtₜᵣ: Trocknungsdauer
- T_{S}: Schmelztemperatur (Kunststoff)

## Patentansprüche

1. Verfahren zur Herstellung eines Innenausstattungsteils (8) für ein Fahrzeug (9), umfassend die folgenden Schritte:
Bereitstellen (S1) einer Fasermatte (1), die ein Fasergemisch aufweist, das als Hauptbestandteile zumindest Naturfasern (N) und zumindest einen schmelzfähigen Kunststoff (K) umfasst;
Erwärmen (S2) der Fasermatte (1) auf einen Trocknungstemperaturbereich (ΔTₜᵣ) und Halten des Trocknungstemperaturbereichs (ΔTₜᵣ) über eine Trocknungsdauer (Δtₜᵣ);
Verdichten (S3) der Fasermatte (1) während des Schrittes des Erwärmens (S2) auf eine Vorverdichtungsdichte, wobei die Trocknungsdauer (Δtₜᵣ) vor Erreichen der Vorverdichtungsdichte endet;
Erhitzen (S4) der Fasermatte (1) über zumindest eine Schmelztemperatur des schmelzfähigen Kunststoffs (K) nach Ablauf der Trocknungsdauer (Δtₜᵣ);
Endverdichten (S5) der Fasermatte (1) zu einem Faserformteil (4);
Auftragen (S8) einer Haftvermittlerschicht (2) auf zumindest einen Oberflächenabschnitt (3) des Faserformteils (4);
Aufbringen (S9) einer Lackschicht (5) auf den mit der Haftvermittlerschicht (2) bedeckten Oberflächenabschnitt (3) zur Ausbildung einer Dekorschicht (6).

2. Verfahren nach dem vorhergehenden Anspruch, wobei die Fasermatte (1) eine ursprüngliche Dichte von 0,1 g/cm³ bis 0,25 g/cm³ aufweist und während des Schrittes des Endverdichtens auf eine Endverdichtungsdichte von 0,4 bis 0,8 g/cm³, bevorzugter 0,5 bis 0,7 g/cm³ verdichtet wird.

3. Verfahren nach einem der vorhergehenden Ansprüche, wobei die Schmelztemperatur während des Schrittes des Erhitzens vor Erreichen der Vorverdichtungsdichte erreicht wird.

4. Verfahren nach einem der vorhergehenden Ansprüche, wobei zumindest während des Schrittes des Erwärmens die Fasermatte (1) mit einer, bevorzugt konstanten, Heizwärme (10) beaufschlagt wird, deren Temperatur zumindest über dem Trocknungstemperaturbereich (ΔTₜᵣ) liegt.

5. Verfahren nach dem vorhergehenden Anspruch, wobei der über eine die Verdichtung beeinflussende Regelgröße die Fasermatte (1) auf eine Temperatur innerhalb des Trocknungstemperaturbereichs (ΔTₜᵣ) gebracht und/oder gehalten wird.

6. Verfahren nach einem der vorhergehenden Ansprüche, wobei die Verdichtung der Fasermatte (1) während des Schrittes des Verdichtens auf die Vorverdichtungsdichte dynamisch oder stufenweise über einen Zeitintervall erfolgt.

7. Verfahren nach einem der vorhergehenden Ansprüche, wobei vor dem Schritt des Verdichtens oder vor dem Schritt des Endverdichtens eine Strukturschicht (7) zumindest im Bereich des Oberflächenabschnitts (3) angeordnet wird.

8. Verfahren nach einem der vorhergehenden Ansprüche, wobei vor und/oder nach dem Schritt des Auftragens (S8) der Haftvermittlerschicht (2) der Oberflächenabschnitt (3) ein Schritt des Glättens (S7) zumindest des Oberflächenabschnitt (3), insbesondere durch Schleifen und/oder Beflammen, erfolgt.

9. Verfahren nach dem vorhergehenden Anspruch, wobei vor dem Schritt des Glättens (S7) ein Schritt des Benetzens (S6) erfolgt, in dem zumindest der Oberflächenabschnitt (3) mit einem Fluid, insbesondere Wasser oder Wasserdampf benetzt wird.

10. Verfahren nach einem der vorhergehenden Ansprüche, wobei die Haftvermittlerschicht (2) durch einen aushärtbaren Haftvermittler, insbesondere einen Sperrprimer oder UV-Primer ausgebildet wird.

11. Verfahren nach einem der vorhergehenden Ansprüche, wobei die Haftvermittlerschicht (2) das Faserformteil (4) zumindest im Oberflächenabschnitt (3) zumindest abschnittsweise fluiddicht verschließt.

12. Verfahren nach einem der vorhergehenden Ansprüche, wobei der Trocknungstemperaturbereich (ΔTₜᵣ) 90 bis 110 Grad Celsius, bevorzugt 95 bis 105 Grad Celsius, beträgt.

13. Verfahren nach einem der vorhergehenden Ansprüche, wobei die Trocknungsdauer 5 bis 30 Sekunden, bevorzugter 10 bis 25 Sekunden, beträgt.

14. Innenausstattungsteil (8) für ein Fahrzeug (9), hergestellt gemäß einem Verfahren nach einem der Ansprüche 1 bis 13, mit einem Faserformteil (4), einer Haftvermittlerschicht (2) und einer Lackschicht (5), wobei das Faserformteil (4) einen Oberflächenabschnitt (3) aufweist, auf der die Haftvermittlerschicht (2) zumindest teilweise angeordnet ist, auf der Haftvermittlerschicht (2) die Lackschicht (5) angeordnet ist und die Lackschicht (5) eine Dekorschicht (6) ausbildet.

15. Innenausstattungsteil (8) nach Anspruch 14, wobei der Oberflächenabschnitt (3) eine Oberflächenstruktur (12) aufweist, die sich zumindest teilweise auf die Lackschicht (5) überträgt, so dass die Oberflächenstruktur (12) zumindest teilweise auf der Lackschicht (5) haptisch und/oder optisch wahrnehmbar ist.

16. Innenausstattungsteil (8) nach Anspruch 14 oder 15, wobei zumindest im Oberflächenabschnitt (3) das Faserformteil (4) eine Strukturschicht (7) aufweist, die die Oberflächenstruktur (12) zumindest anteilig ausbildet.

17. Innenausstattungsteil (8) nach Anspruch 16, wobei die Strukturschicht (7) durch ein textiles Flächengebilde, insbesondere ein Gewebe oder Gelege, ausgebildet ist.

18. Innenausstattungsteil (8) nach einem der Ansprüche 14 bis 17, wobei die Lackschicht (5) eine mittlere Dicke von 10 bis 100 µm aufweist.

19. Fahrzeug (9) mit einem Innenausstattungsteil (8) gemäß einem der Ansprüche 14 bis 18.

## Claims

1. Method for producing an interior cladding part (8) for a vehicle (9), comprising the following steps:
providing (S1) a fibre mat (1), which includes a fibre mixture comprising at least natural fibres (N) and at least one meltable plastic (K) as main constituents;
heating (S2) the fibre mat (1) to a drying temperature range (ΔTₜᵣ) and holding the drying temperature range (ΔTₜᵣ) over a drying time (Δtₜᵣ);
compressing (S3) the fibre mat (1) during the heating step (S2) to a preliminary compression density, wherein the drying time (Δtₜᵣ) ends before the preliminary compression density is reached;
heating (S4) the fibre mat (1) above at least a melting temperature of the meltable plastic (K) after the drying time (Δtₜᵣ) has elapsed;
carrying out a final compression (S5) of the fibre mat (1) to form a fibre moulding (4);
applying (S8) an adhesion promoter layer (2) to at least one surface portion (3) of the fibre moulding (4) ;
applying (S9) a coating layer (5) to the surface portion (3) which is covered with the adhesion promoter layer (2) to form a decorative layer (6).

2. Method according to the preceding claim, wherein the fibre mat (1) has an original density of 0.1 g/cm³ to 0.25 g/cm³ and, during the step of final compression, is compressed to a final compression density of 0.4 to 0.8 g/cm³, preferably 0.5 to 0.7 g/cm³.

3. Method according to either of the preceding claims, wherein, during the heating step, the melting temperature is reached before the preliminary-compression density is reached.

4. Method according to one of the preceding claims, wherein, at least during the heating step, the fibre mat (1) is exposed to a preferably constant thermal heat (10), the temperature of which is at least above the drying temperature range (ΔTₜᵣ).

5. Method according to the preceding claim, wherein the fibre mat (1) is brought to and/or held at a temperature within the drying temperature range (ΔTₜᵣ) via a controlled variable which influences the compression.

6. Method according to one of the preceding claims, wherein, during the compressing step, the fibre mat (1) is compressed to the preliminary-compression density dynamically or in stages over a time interval.

7. Method according to one of the preceding claims, wherein, before the compressing step or before the step of final compression, a structural layer (7) is arranged at least in the region of the surface portion (3) .

8. Method according to one of the preceding claims, wherein, before and/or after the step of applying (S8) the adhesion promoter layer (2) to the surface portion (3), a step of smoothing (S7) at least of the surface portion (3) takes place, in particular by grinding and/or flame treatment.

9. Method according to the preceding claim, wherein, before the smoothing step (S7), a step of wetting (S6) takes place, in which at least the surface portion (3) is wetted with a fluid, in particular water or water vapour.

10. Method according to one of the preceding claims, wherein the adhesion promoter layer (2) is formed by a curable adhesion promoter, in particular a barrier primer or UV primer.

11. Method according to one of the preceding claims, wherein the adhesion promoter layer (2) seals the fibre moulding (4) in a fluid-tight manner at least in certain portions at least in the surface portion (3) .

12. Method according to one of the preceding claims, wherein the drying temperature range (ΔTₜᵣ) is 90 to 110 degrees Celsius, preferably 95 to 105 degrees Celsius.

13. Method according to one of the preceding claims, wherein the drying time is 5 to 30 seconds, preferably 10 to 25 seconds.

14. Interior cladding part (8) for a vehicle (9), produced by a method according to one of Claims 1 to 13, having a fibre moulding (4), an adhesion promoter layer (2) and a coating layer (5), wherein the fibre moulding (4) has a surface portion (3), on which the adhesion promoter layer (2) is at least partially arranged, the coating layer (5) is arranged on the adhesion promoter layer (2), and the coating layer (5) forms a decorative layer (6).

15. Interior cladding part (8) according to Claim 14, wherein the surface portion (3) has a surface structure (12) which is transferred at least partially onto the coating layer (5), with the result that the surface structure (12) can be haptically and/or visually perceived at least partially on the coating layer (5).

16. Interior cladding part (8) according to Claim 14 or 15, wherein, at least in the surface portion (3), the fibre moulding (4) has a structural layer (7), which at least in part forms the surface structure (12).

17. Interior cladding part (8) according to Claim 16, wherein the structural layer (7) is formed by a textile sheet material, in particular a woven fabric or laid fabric.

18. Interior cladding part according to one of Claims 14 to 17, wherein the coating layer (5) has an average thickness of 10 to 100 µm.

19. Vehicle (9) having an interior cladding part (8) according to one of Claims 14 to 18.

## Revendications

1. Procédé de fabrication d'une pièce d'habillage intérieur (8) destinée à un véhicule (9), le procédé comprenant les étapes suivantes :
fournir (S1) un mat de fibres (1) qui comporte un mélange de fibres qui comprend comme constituants principaux au moins des fibres naturelles (N) et au moins une matière synthétique fusible (K) ;
chauffer (S2) le mat de fibres (1) à une plage de températures de séchage (ΔTₜᵣ) et maintenir la plage de températures de séchage (ΔTₜᵣ) pendant une durée de séchage (Δtₜᵣ) ;
comprimer (S3) le mat de fibres (1) pendant l'étape de chauffage (S2) à une densité de pré-compression, la durée de séchage (Δtₜᵣ) se terminant avant que la densité de pré-compression ne soit atteinte ;
chauffer (S4) le mat de fibres (1) au-dessus d'au moins une température de fusion de la matière synthétique fusible (K) après expiration de la durée de séchage (Δtₜᵣ) ;
effectuer une compression finale (S5) du mat de fibres (1) pour former une pièce de fibres moulée (4) ;
appliquer (S8) une couche de promoteur d'adhérence (2) sur au moins une portion de surface (3) de la pièce de fibres moulée (4) ;
appliquer (S9) une couche de peinture (5) sur la portion de surface (3) recouverte de la couche de promoteur d'adhérence (2) pour former une couche décorative (6).

2. Procédé selon la revendication précédente, le mat de fibres (1) ayant une densité initiale de 0,1 g/cm³ à 0,25 g/cm³ et étant comprimé, pendant l'étape finale de compression, à une densité de compression finale de 0,4 à 0,8 g/cm³, plus préférablement de 0,5 à 0,7 g/cm³.

3. Procédé selon l'une des revendications précédentes, la température de fusion étant atteinte pendant l'étape de chauffage avant que la densité de pré-compression ne soit atteinte.

4. Procédé selon l'une des revendications précédentes, le mat de fibres (1) étant soumis, au moins pendant l'étape de chauffage, à une chaleur de chauffage (10), de préférence constante, dont la température est au moins supérieure à la plage de température de séchage (ΔTₜᵣ).

5. Procédé selon la revendication précédente, le mat de fibres (1) étant porté et/ou maintenu à une température dans la plage de température de séchage (ΔTₜᵣ) par une grandeur de régulation influant sur la compression.

6. Procédé selon l'une des revendications précédentes, la compression du mat de fibres (1) à la densité de pré-compression pendant l'étape de compression étant effectuée de manière dynamique ou par étapes sur un intervalle de temps.

7. Procédé selon l'une des revendications précédentes, une couche de structure (7) étant disposée au moins dans la zone de la portion de surface (3) avant l'étape de compression ou avant l'étape de compression finale.

8. Procédé selon l'une des revendications précédentes, une étape de lissage (S7) d'au moins la portion de surface (3) étant effectuée, en particulier par meulage et/ou flambage, avant et/ou après l'étape d'application (S8) de la couche de promotion d'adhérence (2) sur la portion de surface (3).

9. Procédé selon la revendication précédente, une étape de mouillage (S6), dans laquelle au moins la portion de surface (3) est mouillée avec un fluide, notamment de l'eau ou de la vapeur d'eau, étant effectuée avant l'étape de lissage (S7).

10. Procédé selon l'une des revendications précédentes, la couche de promoteur d'adhérence (2) étant formée par un promoteur d'adhérence durcissable, en particulier un primaire d'arrêt ou un primaire UV.

11. Procédé selon l'une des revendications précédentes, la couche de promoteur d'adhérence (2) fermant la pièce de fibres moulée (4) au moins par portions de manière étanche aux fluides au moins dans la portion de surface (3) .

12. Procédé selon l'une des revendications précédentes, la plage de température de séchage (ΔTₜᵣ) étant de 90 à 110 degrés Celsius, de préférence de 95 à 105 degrés Celsius.

13. Procédé selon l'une des revendications précédentes, la durée de séchage étant de 5 à 30 secondes, plus préférablement de 10 à 25 secondes.

14. Pièce d'habillage intérieur (8) destinée à un véhicule (9) et fabriquée conformément à un procédé selon l'une des revendications 1 à 13, ladite pièce comprenant une pièce de fibres moulée (4), une couche de promoteur d'adhérence (2) et une couche de peinture (5), la pièce de fibres moulée (4) comportant une portion de surface (3) sur laquelle la couche de promoteur d'adhérence (2) est au moins partiellement disposée, la couche de peinture (5) étant disposée sur la couche de promoteur d'adhérence (2) et la couche de peinture (5) formant une couche décorative (6).

15. Pièce d'habillage intérieur (8) selon la revendication 14, la portion de surface (3) comportant une structure de surface (12) qui est au moins partiellement transférée sur la couche de peinture (5) de sorte que la structure de surface (12) au moins partiellement sur la couche de peinture (5) puisse être perçue de manière haptique et/ou optique.

16. Pièce d'habillage intérieur (8) selon la revendication 14 ou 15, la partie de fibres moulée (4) comportant, au moins dans la portion de surface (3), une couche de structure (7) qui forme au moins partiellement la structure de surface (12).

17. Pièce d'habillage intérieur (8) selon la revendication 16, la couche de structure (7) étant formée par une structure de surface textile, en particulier un tissu ou un canevas.

18. Pièce d'habillage intérieur (8) selon l'une des revendications 14 à 17, la couche de peinture (5) ayant une épaisseur moyenne de 10 à 100 µm.

19. Véhicule (9) comprenant une pièce d'habillage intérieur (8) selon l'une des revendications 14 à 18.
